# EUROPÄISCHE PATENTSCHRIFT

(11) **EP 1 654 523 B1**
(45) Veröffentlichungstag und Bekanntmachung des Hinweises auf die Patenterteilung: **23.03.2011**
(21) Anmeldenummer: 04764039.6
(22) Anmeldetag: 12.08.2004
(51) Int. Cl.: G01J 1/42, C02F 1/32

(54) **VORRICHTUNG ZUR UV-BEHANDLUNG VON STRÖMENDEN FLUIDEN**
DEVICE FOR THE UV TREATMENT OF FLUID STREAMS
DISPOSITIF POUR TRAITER PAR UV DES COULEMENTS FLUIDIQUES

(30) Priorität: 13.08.2003 DE 10337378
(43) Veröffentlichungstag der Anmeldung: 10.05.2006
(73) Patentinhaber: ITT Manufacturing Enterprises, Inc., Wilmington, DE 19801 (US)
(72) Erfinder: RUDKOWSKI, Jan, Boris, 33615 Bielefeld (DE)
(74) Vertreter: Lenzing Gerber Stute
(86) Internationale Anmeldenummer: PCT/EP2004/009035
(87) Internationale Veröffentlichungsnummer: WO 2005/019782

(56) Entgegenhaltungen:
- EP-A- 1 296 541
- WO-A-02/12127
- US-A- 4 304 996
- US-A- 4 471 225
- PATENT ABSTRACTS OF JAPAN Bd. 2000, Nr. 06, 22. September 2000 (2000-09-22) & JP 2000 070928 A (SHIMADA DENSHI KOGYO KK), 7. März 2000 (2000-03-07)
- HENSEL H ET AL: "EINE UEBERWACHUNGSEINHEIT FUER DIE STRAHLUNGSMESSUNG IN UV-DESINFEKTIONSANLAGEN" GWF WASSER ABWASSER, OLDENBOURG VERLAG. MUNCHEN, DE, Bd. 138, Nr. 10, 1. Oktober 1997 (1997-10-01), Seiten 531-536, XP000722146 ISSN: 0016-3651

## Beschreibung

Die vorliegende Erfindung betrifft eine Vorrichtung zur UV-Behandlung von strömenden Medien, insbesondere eine Vorrichtung zur UV-Desinfektion von Trinkwasser oder Abwasser mit den Merkmalen des Oberbegriffs des Anspruchs 1.

Gattungsgemäße Vorrichtungen sind aus der Praxis bekannt, beispielweise aus der Druckschrift US5,368,826, der US5,660,719, der EP0687201 und der WO00/40511.

Der allgemeine technische Hintergrund der vorliegenden Erfindung betrifft UV-Desinfektionsanlagen. Zunächst wird unterschieden zwischen UV-Desinfektionsanlagen mit Mitteldruckstrahlern, die nicht Gegenstand der vorliegenden Erfindung sind, und solchen Anlagen mit Quecksilber-Niederdruck-UV-Strahlern wie im Oberbegriff des Anspruchs 1 angegeben. Die Anlagen mit Mitteldruckstrahlern weisen üblicherweise wenige Strahlereinheiten auf, die sich durch eine hohe UV-Strahlungsleistung bei entsprechend höherer elektrischer Leistungsaufnahme auszeichnen. Da es sich hier um wenige Strahler handelt, ist eine separate Überwachung jedes einzelnen Strahlers ohne weiteres möglich. Der Aufwand für diese Überwachung ist bei Mitteldruckstrahlern im Vergleich zum sonstigen finanziellen und apparativen Aufwand gering.

Bei Anlagen mit Niederdruckstrahlern ist eine erheblich größere Anzahl von Strahlern im Einsatz, die zwar jeweils eine geringere UV-Strahlungsleistung aufweisen, die aber zum einen gegenüber Mitteldruckstrahlern einen geringeren apparativen Aufwand erfordern und die zum anderen einen erheblich besseren Wirkungsgrad und damit geringere Betriebskosten aufweisen. Derartige Anlagen umfassen deshalb zum Teil mehrere hundert Strahler, die als sogenanntes Array in einem oder mehreren Strömungskanälen angeordnet sind. Diese Strahler werden üblicherweise im Neuzustand gemeinsam eingesetzt und in Betrieb genommen. Die Lebensdauer solcher Strahler beträgt ca. 8.000 bis 9.000 Betriebsstunden, also etwa ein Jahr. Nach dieser Zeit ist die Strahlungsleistung soweit abgesunken, dass die Strahler ausgetauscht werden müssen. Die abgegebene Strahlungsleistung wird von UV-Sensoren überwacht, die entweder das gesamte Array oder einzelne ausgewählte Module oder Gruppen des Arrays überwachen, so in den oben erwähnten Druckschriften US5,368,826, EP0687201 und WO00/40511. Eine Einzelüberwachung aller Strahler ist in diesen Druckschriften nicht vorgesehen. In der Praxis wird davon ausgegangen, dass alle Strahler gleichmäßig altern. In der Druckschrift US 4,471,225 ist jedem Strahler eine Fotozelle zugeordnet, um die Funktion der UV-Strahler zu überwachen.

Ein Ansatz zur Überwachung einzelner Strahler ist in der US5,660,719 vorgeschlagen worden. Bei dieser Vorrichtung wird jeder Lampe eine Spule zugeordnet, die die elektromagnetische Strahlung des in Betrieb befindlichen Strahlers aus der Spannungsversorgung aufnimmt und die dann separat ausgewertet wird. Die abgegebene Strahlungsintensität selbst wird auch bei dieser Druckschrift über einen einzigen UV-Sensor für mehrere Strahler gemessen, so dass das Intensitätssignal nur für das Array insgesamt vorliegt, die Informationen aus der Betriebsspannung jedoch für jede einzelne Lampe vorliegt.

Eine Überwachung der individuellen Strahlungsleistung jedes einzelnen Strahlers ist hiermit jedoch nur mittelbar möglich, da aus dem Verlauf der Versorgungsspannung nicht in eindeutiger Weise auf die abgegebene UV-Strahlung geschlossen werden kann. So ist beispielsweise denkbar, dass bei einem elektrisch und von der Gasfüllung her vollkommen intakten Strahler das Strahlerrohr oder das den Strahler umgebende Hüllrohr nur eine eingeschränkte UV-Transparenz aufweist und deshalb die zur Verfügung stehende UV-Strahlung geringer ist als nach den elektrischen Parametern angenommen wird.

Es ist deshalb Aufgabe der vorliegenden Erfindung, eine Vorrichtung zur UV-Behandlung von strömenden Medien zu schaffen, bei denen viele Quecksilberniederdruckstrahler hinsichtlich ihrer Strahlungsleistung einzeln überwacht werden.

Diese Aufgabe wird von einer Vorrichtung mit den Merkmalen des Anspruchs 1 gelöst.

Weil vorgesehen ist, die Spannungsversorgung des Strahler so einzurichten, dass eine die Strahler im Betrieb beaufschlagende Betriebsspannung bzw. -strom und damit den vom Strahler abgegebenen Strahlungsfluss für einzelne Strahler oder Strahlergruppen zu modulieren ist und weil mindestens eine mit dem Sensormittel verbundene Einheit zur Überwachung der Strahler dazu eingerichtet ist, eine in der von den Strahlern abgegebenen UV-Strahlung enthaltene Modulation auszuwerten, kann ermittelt werden, ob ein mit einer bestimmten Modulation beaufschlagter Strahler diese Modulation in der abgegebenen Strahlung wiedergibt. Auf diese Weise kann ein Rückschluss auf den Betriebszustand des mit der Modulation beaufschlagten Strahlers gezogen werden. Beispielsweise kann die Modulation der Betriebsspannung für jeden einzelnen Strahler einzeln vorgenommen werden, so dass jeder Strahler individuell geprüft werden kann. Die Modulation ist in einfacher Weise eine Amplitudenmodulation.

Bei einem erfindungsgemäßen Verfahren zum Betrieb einer UV-Desinfektionsvorrichtung sind folgende Schritte vorgesehen:
a) Beaufschlagung der Strahler mit einer Betriebsspannung zur Zündung und zum kontinuierlichen Betrieb der Strahler;
b) Modulieren der Betriebsspannung wenigstens eines Strahlers;
c) Erfassen der von den Strahlern abgegebenen UV-Strahlung mit einem UV-Sensor, der geeignet ist, die Modulation zeitlich aufzulösen;
d) Auswerten des von dem UV-Sensors aufgenommenen Signals;
e) Prüfen, ob die Modulation in dem vom UV-Sensor abgegebenen Signal einem Sollwert entspricht.

Mit diesem Verfahren kann ein einzelner Strahler, eine Gruppe von Strahlern oder alle Strahler simultan hinsichtlich der Betriebsspannung moduliert werden. Wenn eine simultane Modulation aller Strahler erfolgt, und die Modulation für jeden Strahler unterschiedlich vorgenommen wird (beispielsweise mit unterschiedlicher Modulationsfrequenz), so können im Betrieb alle Strahler simultan überwacht werden, in dem das Sensorsignal hinsichtlich der verschiedenartigen Modulationen ausgewertet wird und die einzelnen Anteile herausgefiltert werden.

Es kann auch vorgesehen sein, dass im Betrieb die Strahler im wesentlichen unmoduliert betrieben werden und zur Prüfung eines einzelnen Strahlers nur dieser einzelne Strahler mit modulierter Betriebsspannung beaufschlagt wird. Spiegelt sich die Modulation dann im Sensorsignal wieder, so kann der Betriebszustand des Strahlers ermittelt werden. Auf diese Weise können alle Strahler nacheinander geprüft werden, was auch zyklisch wiederholt werden kann.

Beispielsweise weist die Betriebsspannung für die Quecksilberniederdruck-UV-Strahler eine Eigenfrequenz im Bereich von 20 kHz bis 1 MHz auf. Die Modulation der Betriebsspannung erfolgt als Amplitudenmodulation mit Frequenzen im Bereich von 100 Hz bis 100 kHz. Benachbarte Strahler können in Gruppen zusammenfasst sein, wobei die Strahler einer Gruppe gemeinsam mit ähnlichen Frequenzen moduliert werden können, insbesondere mit Frequenzen, die in einem Frequenzraster benachbart sind.

Weiter wird ein elektronisches Vorschaltgerät für einen Quecksilberniederdruckstrahler beschriebe, das dazu eingerichtet ist, eine Modulation auf die Betriebsspannung oder die abgegebene elektrische Leistung aufzubringen, vorzugsweise in Abhängigkeit von einer externen Steuerung.

Im folgenden wird ein Ausführungsbeispiel der vorliegenden Erfindung anhand der Zeichnung beschrieben. Es zeigen:
Figur 1: eine UV-Desinfektionsanlage für strömendes Wasser in einem Querschnitt von der Seite; sowie
Figur 2: das fouriertransformierte Intensitätsspektrum, wie es von der Anlage gemäß Figur 1 in Betrieb erzeugt wird.

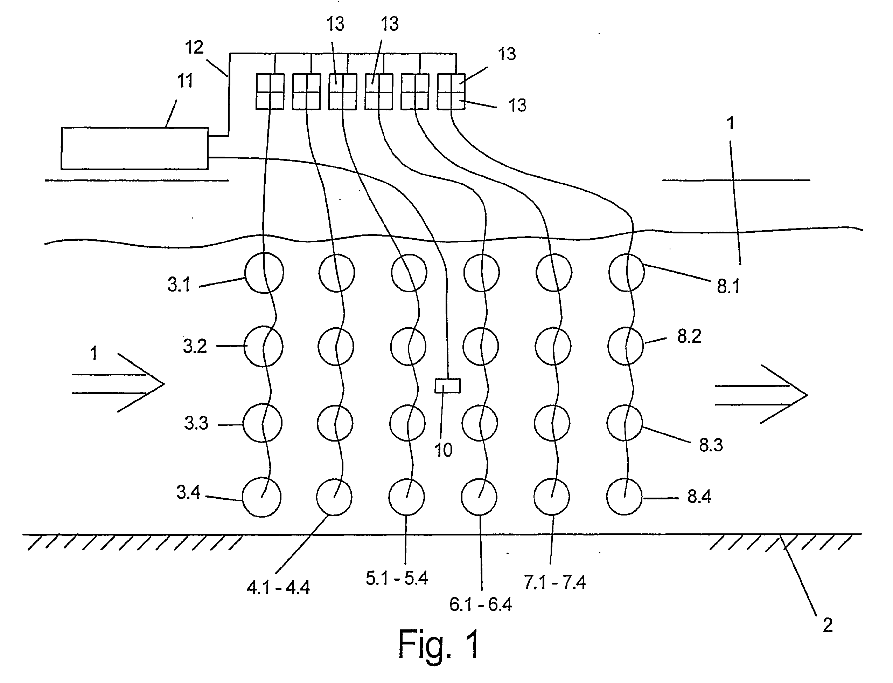

In der Figur 1 ist schematisch eine Vorrichtung zur Desinfektion von strömendem Abwasser in einem Querschnitt von der Seite veranschaulicht. Der Abwasserstrom 1 fließt in einem Kanal 2 in der Darstellung der Figur 1 von links nach rechts. Bei dem Abwasser 1 handelt es sich um den Ablauf einer Kläranlage, also um bereits mechanisch und biologisch gefiltertes Abwasser, das im wesentlichen transparent ist, aber noch Mikroorganismen enthalten kann.

Zur Desinfektion sind in dem Kanal 2 an sich bekannte UV-Strahler 3.1, 3.2, 3.3 und 3.4 angeordnet, die von der Bauart der Quecksilberniederdruck-UV-Strahler sind. Diese Strahler sind röhrenförmig und erstrecken sich in der Figur 1 senkrecht zur Zeichenebene, also quer zur Strömungsrichtung des Abwassers 1. Sie können aber auch senkrecht oder längs in Kanal 2 angeordnet sein. Die UV-Strahler 3 sind üblicherweise so aufgebaut, dass Hüllrohre aus Quarz die eigentlichen UV-Strahler umgeben und gegenüber Ablagerungen aus den Abwasser sowie gegenüber mechanischen Beschädigungen durch im Abwasser mitgeführte Feststoffe schützen. Weitere Strahlergruppen 4.1 bis 4.4, 5.1 bis 5.4, 6.1 bis 6.4, 7.1 bis 7.4 und 8.1 bis 8.4 sind stromabwärts der ersten Strahlergruppe 3 angeordnet. Etwa mittig in der Strahleranordnung 3.1 bis 8.4 ist ein UV-Sensor 10 angeordnet. Der UV-Sensor 10 umfasst eine Siliziumcarbiddiode und ist elektrisch mit einem Steuergerät 11 verbunden. Das Steuergerät 11 steuert über eine Anschlussleitung 12 eine Anzahl von elektronischen Vorschaltgeräten 13, wobei jedem UV-Strahler ein elektronisches Vorschaltgerät 13 zugeordnet ist. In der Figur 1 sind jeweils vier Vorschaltgeräte zu einer Einheit zusammengefasst und einer Gruppe von vier Strahlern zugeordnet.

Die Vorschaltgeräte 13 beaufschlagen über Versorgungsleitungen 14 die UV-Strahler mit einer Betriebsspannung, die zum Zünden und zum Betrieb des UV-Strahlers definierte Strom- und Spannungsverläufe aufweisen muss.

Die Versorgungsspannung, die im Betrieb von den elektronischen Vorschaltgeräten 13 abgegeben wird, ist für die üblicherweise verwendeten Quecksilber-Niederdruckstrahler eine Wechselspannung mit einer Frequenz im Bereich von 50 bis 100kHz.

Da der UV-Sensor 10 wie aus dem Stand der Technik bekannt direkt und indirekte UV-Strahlung von allen Strahlern empfängt, kann nicht ohne weiteres festgestellt werden, ob ein bestimmter Strahler gezündet hat und in vorgesehener Weise strahlt.

Um dieses festzustellen, wird von dem Steuergerät 11 ein bestimmtes Vorschaltgerät 13 so angesteuert, dass die Betriebsspannung des diesem Steuergerät zugeordneten Strahlers mit einer Amplitudenmodulation von beispielsweise 400Hz und einem Hub von ebenso beispielsweise +/- 10% der Betriebsspannung moduliert wird. Die mit der Modulationsfrequenz von 400Hz oszillierende Intensität ist mit dem UV-Sensor 10 zu erfassen. Zu diesem Zweck ist der UV-Sensor 10 anders als bei üblichen Sensoren nicht mit einem Tiefpassfilter versehen, der üblicherweise Frequenzen oberhalb von etwa 20Hz abschneidet, um Einflüsse der Netzfrequenz (50Hz bzw. 60Hz) auszuschließen. Der UV-Sensor gemäß der vorliegenden Erfindung arbeitet hingegen bis zu Frequenzen von mindestens einigen Kilohertz.

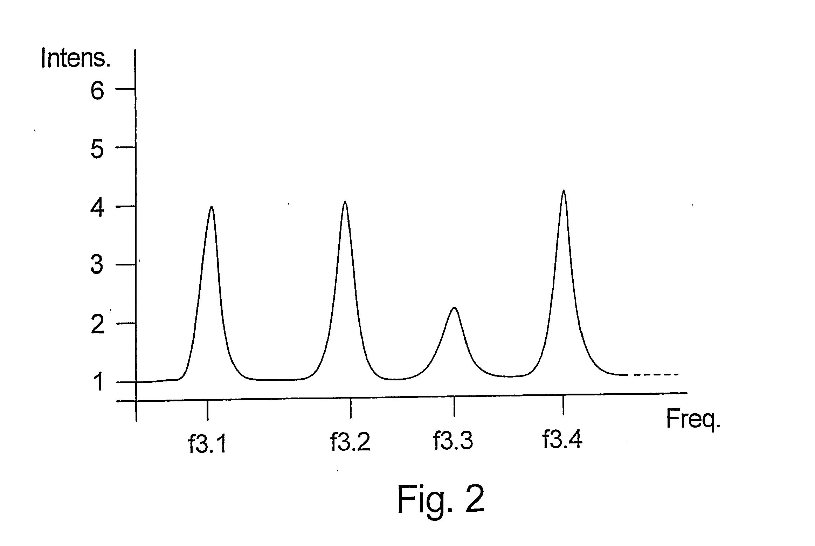

Zur Auswertung des vom UV-Sensor 10 empfangenen und an das Steuergerät 11 weitergeleiteten Intensitätssignals wird dieses Signal zweckmäßigerweise einer Fouriertransformation unterzogen, beispielsweise nach dem bekannten FFT-Algorithmus. Mit diesem Algorithmus wird das Spektrum der UV-Strahlung, so wie es vom UV-Sensor 10 empfangen wird, nach Intensität und Frequenz aufgelöst. Ein solches Spektrum ist in der Figur 2 veranschaulicht.

In der Figur 2 ist das fouriertransformierte Signal des UV-Sensors 10 als Frequenzspektrum aufgetragen. In der X-Achse ist die Frequenz aufgetragen, in der Y-Achse die relative Intensität in willkürlichen Einheiten.

Bei dem beispielhaft aufgeführten Spektrum weisen die Frequenzen f3.1 und f3.2 sowie f3.4 etwa die gleiche Intensität auf, während die Linie bei der Frequenz f3.3 eine geringere Intensität hat. In dem Steuergerät 11 würde dieses Spektrum dann so gewertet, dass der Frequenz f3.3 zugeordnete Strahler 3.3 das Modulationsignal, das in der Betriebsspannung für alle Strahler den gleichen Hub aufweist, nicht in eine entsprechende Intensitätsmodulation umsetzt. Dies ist ein Indiz dafür, dass die gesamte Strahlungsleistung des Strahlers 3.3 geringer ist als diejenige der drei anderen Strahler der Strahlergruppe.

Die Modulationsfrequenzen für die übrigen Strahler 4.1 bis 8.4 sind in der Figur 2 nicht dargestellt. Sie liegen entsprechend der Abbildung der Figur 2 bei anderen Frequenzen. Der besseren Übersichtlichkeit im Frequenzspektrum dient es, wenn die Modulationsfrequenzen von benachbarten Strahlern ähnlich sind. So kann man beispielsweise für den Strahler 3.1 als Modulationsfrequenz 400Hz wählen, der Strahler 3.2 würde 450Hz erhalten, der Strahler 3.3 500Hz und der Strahler 3.4 550Hz. Entsprechend erhalten die übrigen Strahler dann höhere Modulationsfrequenzen. Über die Steuerung 11 und die einzeln angesteuerten Vorschaltgeräte 13 ist die jeweilige Modulation eindeutig dem betreffenden Strahler zugeordnet.

Während bei der Darstellung gemäß Figur 2 alle Strahler einer Strahlergruppe simultan moduliert werden, kann es auch vorgesehen sein, dass Strahler nur kurzzeitig einzeln moduliert werden. Dann wird beispielsweise dem Strahler 4.1 eine Modulation aufgeprägt und gleichzeitig geprüft, ob diese Modulation vom UV-Sensor erfasst wird. Im fouriertransformierten Spektrum taucht dann bei der Modulationsfrequenz eine Linie ähnlich wie in Figur 2 auf und das Fehlen dieser Linie ist ein Indiz für eine Fehlfunktion des Strahlers oder einer zugeordneten Komponente.

Aus der Darstellung der Figur 1 ist ersichtlich, dass nicht alle Strahler gleichmäßig zu dem vom UV-Sensor 10 empfangenen Signal beitragen. So ist der Strahler 3.1 beispielsweise in der direkten Sichtlinie gegenüber dem UV-Sensor 10 abgeschattet, während der Strahler 5.2 den UV-Sensor unmittelbar mit Strahlung beaufschlagt. Deshalb ist zu erwarten, dass das nur indirekt empfangene Signal von dem Strahler 3.1 einen geringeren Beitrag zur empfangenen Gesamtintensität liefert. Um diese Geometrieabhängigkeit auszugleichen und das Überwachungssystem zu kalibrieren, kann folgendermaßen vorgegangen werden.

Zunächst können nach der Installation alle Strahler eingeschaltet werden, ohne ihre Betriebsspannung zu modulieren. Dann kann für jeden Strahler einzeln die Modulation auf die Betriebsspannung aufgeprägt werden und dann überprüft und gespeichert werden, welche Intensität die zugehörige Linie (f3.1 bis f8.4) aufweist. Diese Linie kann dann als ein 100%-Signal für den betreffenden Strahler normiert werden. Wenn im Laufe der Zeit durch Alterung der Strahler die Betriebsspannung erhöht werden muss, um eine konstante UV-Intensität im Abwasser 1 zu gewährleisten, wird sich bei einer proportional ebenfalls geänderten Modulation die Intensität der jeweiligen Linie nicht verändern. Es kann also jederzeit geprüft werden, ob ein einzelner Strahler die vorgesehene Intensität erbringt und ob die Strahler einer Gruppe oder alle Strahler insgesamt eine gleichmäßige Leistung erbringen oder ob einzelne Strahler in der Leistung stärker abfallen als andere. Schließlich ist es möglich, die Leistung der einzelnen Strahler individuell zu regeln, um eine insgesamt gleichmäßige Verteilung der Bestrahlungsstärke im Abwasser 1 zu erzielen.

Bei größeren Anlagen als der in Figur 1 dargestellten Desinfektionsanlage kann es erforderlich sein, mehrere Sensoren einzusetzen. Dies wird insbesondere dann nötig werden, wenn in der Desinfektionsvorrichtung mehrere Kanäle 2 vorgesehen sind, die optisch voneinander getrennt sind. Es bleibt jedoch der Vorteil, dass nicht für jeden Strahler ein separater UV-Sensor erforderlich ist und dass aufgrund der individuellen Modulationsfrequenz der einzelne Beitrag an Bestrahlung auch bei gleichzeitigem Betrieb anderer benachbarter Strahler ermittelt werden kann.

Im vorliegenden Ausführungsbeispiel wurde als Modulationsart die Amplitudenmodulation mit einer Frequenz von einigen hundert bis einigen tausend Hertz und einem Modulationshub von +/- 10% der Betriebsspannung vorgeschlagen. Andere Modulationsarten sind ebenso möglich. Beispielsweise kann das Signal als eine Pulsmodulation in Form einer Pulsweitenmodulation auf die Betriebsspannung aufmoduliert werden. Zur Demodulation sind dann möglicherweise andere Verfahren erforderlich, die der gewählten Modulationsart eher angepasst sind als die oben beschriebene Fouriertransformation. Zum Beispiel können Bandfilter eingesetzt werden, die die Modulationsfrequenz gezielt aus dem Gesamtsignal herausfiltern.

## Patentansprüche

1. Vorrichtung zur UV-Behandlung von in einem Strömungskanal strömenden Fluiden, mit einer Anzahl von UV-Strahlern, die in dem Strömungskanal angeordnet sind, mit Sensormitteln von der Bauart eines UV-Sensors zur Überwachung des Betriebszustandes der Strahler, sowie mit wenigstens einer Spannungsversorgung der Strahler und wenigstens einer mit den Sensormitteln, verbundenen Einheit zur Überwachung der Strahler, **dadurch gekennzeichnet, dass** die Spannungsversorgung der Strahler dazu eingerichtet ist, eine die Strahler im Betrieb beaufschlagende Betriebsspannung für einzelne Strahler oder Strahlergruppen zu modulieren, und dass die wenigstens eine mit den Sensormitteln verbundene Einheit zur Überwachung der Strahler dazu eingerichtet ist, eine in der von den Strahlern abgegebenen UV-Strahlung enthaltene Modulation auszuwerten.

2. Vorrichtung nach Anspruch 1, **dadurch**
**gekennzeichnet, dass** die Strahler Quecksilberniederdruck-UV-Strahler sind, vorzugsweise von der Bauart der Amalgamstrahler.

3. Vorrichtung nach einem der vorhergehenden Ansprüche,
**dadurch gekennzeichnet, dass** die Modulation der Betriebsspannung für jeden Strahler einzeln vorgenommen werden kann.

4. Vorrichtung nach einem der vorhergehenden Ansprüche, **dadurch gekennzeichnet, dass** die Modulation eine Amplitudenmodulation ist.

5. Vorrichtung nach einem der vorhergehenden Ansprüche,
**dadurch gekennzeichnet, dass** die Auswertung der Modulation mittels einer Fourier-Transformation erfolgt.

6. Vorrichtung nach einem der vorhergehenden Ansprüche,
**dadurch gekennzeichnet, dass** zur Kalibrierung die Strahler einzeln abschaltbar sind.

7. Verfahren zum Betrieb einer Strahler aufweisenden UV-Desinfektionsvorrichtung mit folgenden Schritten:
a) Beaufschlagung der Strahler mit einer Betriebsspannung zur Zündung und zum kontinuierlichen Betrieb der Strahler;
b) Modulieren der Betriebsspannung, des Betriebsstroms oder der elektrischen Leistung wenigstens eines Strahlers;
c) Erfassen der von den Strahlern abgegebenen UV-Strahlung mit einem UV-Sensor, der geeignet ist, die Modulation zeitlich aufzulösen;
d) Auswerten des von dem UV-Sensors aufgenommenen Signals;
e) Prüfen, ob die Modulation in dem vom UV-Sensor abgegebenen Signal einem Sollwert entspricht.

8. Verfahren nach Anspruch 7, **dadurch**
**gekennzeichnet, dass** im Schritt b) die Modulation für jeden Strahler unterschiedlich vorgenommen wird.

9. Verfahren nach Anspruch 7, **dadurch**
**gekennzeichnet , dass** im Betrieb die Strahler im wesentlichen unmoduliert betrieben werden und zur Prüfung eines einzelnen Strahlers nur dieser einzelne Strahler mit modulierter Betriebsspannung beaufschlagt wird.

10. Verfahren nach Anspruch 9, **dadurch**
**gekennzeichnet, dass** der Schritt der Modulation für alle Strahler nacheinander ausgeführt wird.

11. Verfahren nach Anspruch 9 oder 10, **dadurch gekennzeichnet, dass** der Schritt der Modulation zyklisch wiederholt wird.

12. Verfahren nach einem der vorhergehenden Ansprüche, **dadurch gekennzeichnet, dass** die Betriebsspannung für die Quecksilberniederdruck-UV-Strahler eine Eigenfrequenz im Bereich von 20 kHz bis 1 MHz aufweist und dass die Modulation der Betriebsspannung als Amplitudenmodulation mit Frequenzen im Bereich von 100 Hz bis 100 kHz erfolgt.

13. Verfahren nach einem der vorhergehenden Ansprüche, **dadurch gekennzeichnet, dass** benachbarte Strahler können in Gruppen zusammenfasst sein, wobei die Strahler einer Gruppe gemeinsam mit ähnlichen Frequenzen moduliert werden können, insbesondere mit Frequenzen, die in einem Frequenzraster benachbart sind.

## Claims

1. Device for the UV treatment of fluids flowing in a flow channel comprising a plurality of UV emitters, which are disposed in the flow channel, sensor means of the UV-sensor type for monitoring the operating state of the emitters, as well as at least one means for supplying power to the emitters and at least one unit, connected to the sensor means, for monitoring the emitters, **characterised in that** the means for supplying power to the emitters is configured to modulate an operating voltage for individual emitters or groups of emitters that is supplied to the emitters during operation, and **in that** the at least one unit, connected to the sensor means, for monitoring the emitters is configured to evaluate a modulation contained in the UV radiation emitted by the emitters.

2. Device according to claim 1, **characterised in that** the emitters are low-pressure mercury UV emitters, preferably amalgam-type emitters.

3. Device according to any one of the preceding claims, **characterised in that** the operating voltage for each emitter can be modulated individually.

4. Device according to any one of the preceding claims, **characterised in that** the modulation is an amplitude modulation.

5. Device according to any one of the preceding claims, **characterised in that** evaluation of the modulation is effected by means of a Fourier transformation.

6. Device according to any one of the preceding claims, **characterised in that** the emitters can be switched off individually for purposes of calibration.

7. Method of operating a UV disinfection device having emitters comprising the following steps:
a) Supplying the emitters with an operating voltage for firing and for continuous operation of the emitters;
b) Modulating the operating voltage, the operating current or the electrical power of at least one emitter;
c) Detecting UV radiation emitted by the emitters using a UV sensor, which is adapted to temporally resolve the modulation;
d) Evaluating the signal recorded by the UV sensor;
e) Checking whether the modulation in the signal emitted by the UV sensor corresponds to a desired value.

8. Method according to claim 7, **characterised in that** in step b) the modulation is carried out differently for each emitter.

9. Method according to claim 7, **characterised in that** during operation the emitters are operated in a substantially un-modulated manner and, for checking an individual emitter, only said individual emitter is supplied with modulated operating voltage.

10. Method according to claim 9, **characterised in that** the modulation step is carried out successively for all emitters.

11. Method according to claim 9 or 10, **characterised in that** the modulation step is repeated cyclically.

12. Method according to any one of the preceding claims, **characterised in that** for low-pressure mercury UV emitters the operating voltage has a natural frequency in the range of from 20 kHz to 1 MHz and **in that** the modulation of the operating voltage takes place in the form of amplitude modulation at frequencies of from 100 Hz to 100 kHz.

13. Method according to any one of the preceding claims, **characterised in that** adjacent emitters may be combined into groups, wherein the emitters of a given group may be jointly modulated at similar frequencies, in particular at frequencies that are adjacent in a frequency grid.

## Revendications

1. Dispositif pour traiter par UV des fluides s'écoulant dans un canal d'écoulement, comportant une pluralité de lampes UV, qui sont disposées dans le canal d'écoulement, des moyens de capteur sous la forme d'un capteur d'UV pour surveiller l'état de fonctionnement des lampes, ainsi qu'au moins une alimentation en tension des lampes et au moins une unité reliée aux moyens de capteur pour surveiller les lampes, **caractérisé en ce que** l'alimentation en tension des lampes est disposée de manière à moduler une tension de fonctionnement alimentant en fonctionnement les lampes pour différents lampes ou des groupes de lampes, et **en ce que** la au moins une unité reliée aux moyens de capteur pour surveiller les lampes est disposée de manière à évaluer une modulation contenue dans le rayonnement UV généré par les lampes.

2. Dispositif selon la revendication 1, **caractérisé en ce que** les lampes sont des lampes UV à basse pression de mercure, de préférence sous la forme de lampes à amalgame.

3. Dispositif selon l'une des revendications précédentes, **caractérisé en ce que** la modulation de la tension de fonctionnement peut être établie différemment pour chaque lampe.

4. Dispositif selon l'une des revendications précédentes, **caractérisé en ce que** la modulation est une modulation d'amplitude.

5. Dispositif selon l'une des revendications précédentes, **caractérisé en ce que** l'évaluation de la modulation s'effectue grâce à une transformation de Fourier.

6. Dispositif selon l'une des revendications précédentes, **caractérisé en ce que** les lampes peuvent être mises hors tension individuellement en vue d'un calibrage.

7. Procédé pour le fonctionnement d'un dispositif de désinfection par UV possédant une lampe comportant les étapes suivantes :
a) alimentation des lampes par une tension de fonctionnement pour l'allumage et le fonctionnement continu des lampes ;
b) modulation de la tension de fonctionnement, du courant de fonctionnement ou de la capacité électrique d'au moins une lampe ;
c) détection du rayonnement UV délivré par les lampes grâce à un capteur d'UV, qui est approprié pour déclencher temporairement la modulation ;
d) évaluation du signal enregistré par le capteur d'UV ;
e) vérification si la modulation dans le signal délivré par le capteur d'UV correspond à une valeur de consigne.

8. Procédé selon la revendication 7, **caractérisé en ce que**, au cours de l'étape b), la modulation est établie différemment pour chaque lampe.

9. Procédé selon la revendication 7, **caractérisé en ce que**, en fonctionnement, les lampes fonctionnent de façon sensiblement non modulée et, en vue de la vérification d'une lampe particulière, seule cette lampe particulière est alimentée par une tension de fonctionnement modulée.

10. Procédé selon la revendication 9, **caractérisé en ce que** l'étape de modulation est réalisée pour toutes les lampes les unes après les autres.

11. Procédé selon la revendication 9 ou 10, **caractérisé en ce que** l'étape de la modulation est répétée cycliquement.

12. Procédé selon l'une des revendications précédentes, **caractérisé en ce que** la tension de fonctionnement pour les lampes UV à basse pression de mercure présente une fréquence propre comprise entre 20 kHz et 1 MHz et **en ce que** la modulation de la tension de fonctionnement en tant que modulation d'amplitude est effectuée avec des fréquences comprises entre 100 Hz et 100 kHz.

13. Procédé selon l'une des revendications précédentes, **caractérisé en ce que** des lampes adjacentes peuvent être réunies en groupe, dans lequel lampes d'un groupe peuvent être modulées conjointement avec des fréquences semblables, en particulier avec des fréquences, qui sont proches dans une plage de fréquence.
